(19) Europäisches Patentamt
European Patent Office
Office européen des brevets

(11) **EP 3 156 471 A1**

(12) **EUROPEAN PATENT APPLICATION**
published in accordance with Art. 153(4) EPC

(43) Date of publication:
**19.04.2017 Bulletin 2017/16**

(51) Int Cl.:
***C09K 8/80*** *(2006.01)*      ***C09K 8/92*** *(2006.01)*
***E21B 43/267*** *(2006.01)*

(21) Application number: **14888550.2**

(22) Date of filing: **02.04.2014**

(86) International application number:
**PCT/RU2014/000233**

(87) International publication number:
**WO 2015/152755 (08.10.2015 Gazette 2015/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Schlumberger Holdings Limited**
**Road Town, Tortola 1110 (VG)**
Designated Contracting States:
**GB NL**
• **Schlumberger Technology B.V.**
**2514 JG The Hague (NL)**
• **Services Pétroliers Schlumberger**
**75007 Paris (FR)**
Designated Contracting States:
**FR**

(72) Inventors:
• **IVANOV, Maxim Grigorievich**
**g. Novosibirsk 630055 (RU)**
• **MEDVEDEV, Anatoly Vladimirovich**
**Moscow 117588 (RU)**
• **NAYDUKOVA, Svetlana Anatolyevna**
**g. Novosibirsk 630060 (RU)**

(74) Representative: **Schlumberger Cambridge**
**Research Limited**
**Intellectual Property Law**
**High Cross**
**Madingley Road**
**Cambridge CB3 0EL (GB)**

(54) **PROPPING AGENT AND METHOD FOR PLACING SAME IN A HYDRAULIC FRACTURE**

(57)     The present disclosure relates to production of fluids from subterranean formations and can be applied for stimulation of the flow through the formation by means of hydraulic fracturing. More particularly, it relates to creation of proppants with soluble coating, and preparing fluid material for fracturing operations and for enhancing the efficiency of heterogeneous proppant placement in a hydraulic fracture.

The present disclosure is aimed at the improvement of heterogeneous proppant placement being done with the use of the currently available equipment-based way of alternating proppant-laden and proppant-free stage delivery. It is achieved by creating a proppant with soluble coating, by creating a material on their basis to be used as packing for formation fracturing operations, and by providing an improved hydraulic fracturing method with heterogeneous proppant placement in a hydraulic fracture.

The technical result is to provide improved rheological stability of the fluid in a proppant-laden pulse and a higher washing stability of a proppant stage, in the reduced undesirable effect of changes in the concentration of additives, which ultimately results in fracture width reduction and in optimal placement of proppant-laden stages. Subsequently, such changes also lead to higher hydraulic fracture conductivity parameters

**Description**

**FIELD OF THE DISCLOSURE**

The disclosure relates to the recovery of fluids from subterranean formations and can be applied for the stimulation of the flow through the formation by means of hydraulic fracturing. More particularly, it relates to the creation of proppants with soluble coatings to be applied in their heterogeneous placement in a hydraulic fracture, creation of materials on their basis to be used as packing for formation fracturing operations and improvement of hydraulic fracturing methods with heterogeneous proppant placement in a hydraulic fracture.

**BACKGROUND**

The hydraulic fracturing of a subterranean formation includes, as one of the stages, adding the proppant in the fracturing fluid together with various additives such as a crosslinker, an activator, a non-emulsifier, etc., which alter the properties of the fracturing fluid. In case of the heterogeneous proppant placement (HPP) technology, the fracturing fluid comprises the sequence of alternate stages (pulses) containing the proppant (dirty pulse) and free from the proppant (clean pulse). Due to operational constraints, fracturing additives are added to the slurry at a constant rate, which leads to variation of their concentrations in the fracturing fluid between clean and dirty pulses.

The quality of fracturing fluids may however be quite sensitive to additives concentration in the way that long-term high temperature stability of the fluid bottomhole may get compromised in case of deviation of additives concentrations from the optimal values; the rheological properties of the fluid may deviate from the optimal ones. The other concern associated with operation of heterogeneous proppant placement (HPP) is washing out stability of the proppant-laden fluid. While pumping the slurry down to the perforations, washing out of the proppant-laden area and its partial admixture with a clean pulse may happen in the hydraulic fracture, which ultimately results in fracture width reduction and in changes of the scheduled optimal placement of proppant areas. Subsequently, such changes can affect the hydraulic fracture conductivity parameters. In case of a low-viscosity fracturing fluid (slickwater or linear gel or crosslinked gel at low polymer loading), the effect of the additives concentration change (dilution) becomes more clear.

In order to maintain better proppant stage stability and reduce the negative effect of the additives concentration change, the present disclosure suggests a novel idea of using the proppant coated with a gelling agent, which becomes released when the proppant is introduced to the fluid. Due to this release of the gelling agent, the viscosity of the dirty stage increases locally, and hence it promotes the better washing out stability of the proppant-laden fluid and reduces the effect of the additives concentration change on the fluid properties. Taking into account that the hydraulic fracture conductivity with heterogeneous proppant placement is determined by the presence of channels, the excessive amount of gelling agent will not affect the fracture conductivity.

There are several information sources disclosing the ways of heterogeneous proppant placement in a hydraulic fracture. In general, they can be split into the categories covering the various concepts of proppant agglomeration in the well.

    1. Heterogeneous placement induced by alternating proppant delivery on the surface.
    2. Proppant agglomeration occurring under subterranean conditions, while adding the proppant to the fracturing fluid on the surface in a conventional way (continuous proppant delivery without pulsation), basically representing chemistry-oriented and non-equipment-related approach.

The present disclosure is mostly focused on heterogeneous proppant placement induced by alternative proppant delivery to the fracturing fluid, therefore the first category of the analysed sources is in focus.

The Patent [US6776235 B1, 2004] claimed a method for fracturing a subterranean formation by sequentially injecting in the wellbore alternate stages of the proppant containing fracturing fluids differing in their ability to transport proppants. This can be achieved by (a) alternating proppant stages and proppant-free stages and also by (b) pumping the fluids, which may have varying density and foam quality to facilitate variations of the proppant settling rate.

The Patent [US7581590 B2, 2009] claimed a more reliable method of HPP by injecting the fracturing fluid comprising the proppant and channelant wherein the channelant comprises a solid acid precursor to generate acid in the fracture. The presence of the said solid acid precursor allows a more reliable HPP.

The patents focused on proppant agglomeration in the wellbore while proppant delivery happens in a conventional way without alternating proppant and proppant-free pulses are discussed below.

The Patent [US7798224 B2, 2010] discloses fluid rheology-controlled method of HPP in a fracture. The realisation of this approach is claimed to be managed by the use of an additive for reducing fluid viscosity with non-monotonic rheology properties.

The Patent Application [US20130056213 A1, 2013] discloses the method of proppant aggregation by causing or allowing syneresis of the polymer gel that viscosifies the carrier fluid; the formation of a polyelectrolyte complex from cationic and anionic polymers included in or created in the carrier fluid; and by increasing the temperature of the carrier fluid above the solution temperature of a polymer in the fluid.

The present disclosure, however, is aimed at the improvement of heterogeneous proppant placement being done with the use of the currently available equipment-based way of alternating proppant-laden and proppant-free stage delivery. As the method involves the advanced gelling agent delivery together with the proppant, below is the performed source analysis of gelling agent-modified proppants.

It is worth mentioning that there are several patents related to chemically modified proppants, the Application [US2012227967 A1, 2012] among them, claiming a proppant particle comprising components coated onto a substrate in an amount sufficient to produce a viscous carrier fluid capable of suspending the substrate when the particle is mixed with a base fluid. Further claims cover the method of stimulating a subterranean formation, comprising the following: providing a base fluid and a particle comprising components coated onto a substrate in an amount sufficient to produce a viscous carrier fluid capable of suspending the substrate when the particle is mixed with the base fluid, wherein the components comprise a polymer in an amount sufficient to viscosify the base fluid to a viscosity of at least about 50 cP; and, contacting the subterranean formation with the mixture of the carrier fluid and the particle. There are however no references to the use of these coated particles for HPP specifically where the component coated on the solid particle is a gelling agent.

Modified proppants including proppant particles and coating hydrogel, wherein coating hydrogel is localised on the surface of the proppant particles, are known from the [US2014000891 A1, 2014], [WO2013158308 A1, 2013] prior art sources. In the above solutions, coating is not dissolved in the fluid. It is attached to a proppant particle and swells in the fluid.

Of interest is the effect of gel syneresis on its properties. It was found that, in case of an excessive amount of the crosslinker loaded in the linear gel, the addition of some extra gelling agent increases viscosity and reduces the effect of syneresis.

## SUMMARY

One embodiment of the present disclosure relates to a proppant being the particulate material where each particle comprises a proppant particle substrate, a water-soluble external coating on the proppant particle substrate, and a gelling agent at least partially embedded in the water-soluble external coating in such a manner so that the said agent is substantially released from the proppant particle substrate when the water-soluble coating dissolves or degrades as a result of proppant introduction into the fracturing fluid stages during heterogeneous proppant placement in a hydraulic fracture.

In various other aspects of the technical solution:

the gelling agent has the rate of dissolution in the fracturing fluid that exceeds the rate of dissolution of the water-soluble external coating in the fracturing fluid, which allows the coating to prevent the premature release of the gelling agent into the fracturing fluid before the proppant enters the fracturing fluid;

while being released into the fracturing fluid, the gelling agent is able to increase the fracturing fluid viscosity in a proppant-laden stage as compared to the fracturing fluid viscosity in a proppant-free stage;

while being released into the fracturing fluid, the gelling agent is able to reduce the undesirable effect of changes in the concentration of additives, in particular, to prevent the excessive degree of crosslinking in a proppant-laden stage;

the content of the gelling agent is from about 0.1 weight percent to about 10.0 weight percent of proppant, for example, from about 0.3 weight percent to about 5.0 weight percent of proppant;

the candidate materials for the gelling agent comprise guar and its derivatives comprising, but not limited to, polysaccharide guar, hydroxypropyl guar, carboxymethyl hydroxypropyl guar, cellulose and its derivatives, comprising, but not limited to, carboxymethyl hydroxypropyl cellulose, and the combinations thereof;

the content of the water-soluble external coating is from about 0.1 weight percent to about 10.0 weight percent of proppant, for example, from about 1.0 weight percent to about 5.0 weight percent of proppant;

the water-soluble coating material is selected from the list of water-soluble polymers: polyvinylalcohol with various vinylacetate groups content, polyacrylic acid, polyacrylamides, polyethylene glycol, polyvinylpyrrolidone copolymers, polyamines, polyethylamines, gelatin, starch, casein, derivatives and combinations thereof;

the proppant particle substrate is selected from the group of sands, ceramic proppants, and polymer-based proppants selected from ultra-lightweight proppants, super-lightweight proppants, lightweight proppants, medium-strength, high-strength, and ultra-high-strength proppants, composite particles usable as proppants for hydraulic fracturing, and combinations thereof.

In some embodiments, the present disclosure relates the particulate material for enhancing the efficiency of a method for heterogeneous proppant placement in at least one fracture of a fractured layer of the subterranean formation, which contains a substrate from the particles located underground, a water-soluble external coating on the underground particle substrate, and a gelling agent at least partially embedded in the water-soluble external coating in such a manner so that the said agent is substantially released from the underground particles when the water-soluble coating dissolves or degrades as a result of proppant introduction into the fracturing fluid stages during heterogeneous proppant placement in a hydraulic fracture.

Therewith, the particulate material forms hydraulic fracture packing;
the gelling agent has the rate of dissolution in the fracturing fluid that exceeds the rate of dissolution of the water-soluble external coating in the fracturing fluid, which allows the coating to prevent the premature release of the gelling agent into the fracturing fluid before proppant enters the fracturing fluid;
while being released into the fracturing fluid, the gelling agent is able to increase the fracturing fluid viscosity in a proppant-laden stage as compared to the fracturing fluid viscosity in a proppant-free stage;
while being released into the fracturing fluid, the gelling agent is able to reduce the undesirable effect of changes in the concentration of additives, in particular, to prevent the excessive degree of crosslinking in a proppant-laden stage;
the content of the gelling agent is from about 0.1 weight percent to about 10.0 weight percent of proppant, for example, from about 0.3 weight percent to about 5.0 weight percent of proppant;
the candidate materials for the gelling agent comprise guar and its derivatives comprising, but not limited to, polysaccharide guar, hydroxypropyl guar, carboxymethyl hydroxypropyl guar, cellulose and its derivatives, comprising, but not limited to, carboxymethyl hydroxypropyl cellulose, and the combinations thereof;
the content of the water-soluble external coating is from about 0.1 weight percent to about 10.0 weight percent of proppant, for example, from about 1.0 weight percent to about 5.0 weight percent of proppant;
the water-soluble coating material is selected from the list of water-soluble polymers: polyvinylalcohol with various vinylacetate groups content, polyacrylic acid, polyacrylamides, polyethylene glycol, polyvinylpyrrolidone copolymers, polyamines, polyethylamines, gelatin, starch, casein, derivatives and combinations thereof;
the proppant particle substrate is selected from the group of sands, ceramic proppants, and polymer-based proppants selected from ultra-lightweight proppants, super-lightweight proppants, lightweight proppants, medium-strength, high-strength, and ultra-high-strength proppants, composite particles usable as proppants for hydraulic fracturing, and combinations thereof.

In some embodiments, the present disclosure relates a method for enhancing the efficiency of heterogeneous proppant placement in at least one fracture of a fractured layer, the method comprising the injection of alternating fracturing fluid stages laden with the particulate material, and fracturing fluid stages free from the particulate material, into the fractured layer at a pressure exceeding the fracturing pressure, through a plurality of perforation clusters in the wellbore in the fractured layer, where fracturing fluid stages laden with the particulate material, form supports after fracture closure.

Therewith, the particulate material is a proppant comprising a proppant particle substrate, a water-soluble external coating on the proppant particle substrate, and a gelling agent at least partially embedded in the water-soluble external coating in such a manner so that the gelling agent is substantially released from the underground particles when the water-soluble coating dissolves or degrades as a result of proppant introduction into the fracturing fluid stages during heterogeneous proppant placement in a hydraulic fracture;
the gelling agent has the rate of dissolution in the fracturing fluid that exceeds the rate of dissolution of the water-soluble external coating in the fracturing fluid, which allows the coating to prevent the premature release of the gelling agent into the fracturing fluid before proppant enters the fracturing fluid;
while being released into the fracturing fluid, the gelling agent is able to increase the fracturing fluid viscosity in a proppant-laden stage as compared to the fracturing fluid viscosity in a proppant-free stage;
some or all fracturing fluid stages additionally contain additives such as crosslinker, activator, gel breaker, etc., to impart the corresponding properties to the fracturing fluid;
while being released into the fracturing fluid, the gelling agent is able to reduce the undesirable effect of changes in the concentration of additives, in particular, to prevent the excessive degree of crosslinking in a proppant-laden stage;
the content of the gelling agent is from about 0.1 weight percent to about 10.0 weight percent of proppant, for example, from about 0.3 weight percent to about 5.0 weight percent of proppant;

the candidate materials for the gelling agent comprise guar, hydroxypropyl guar, carboxymethyl hydroxypropyl guar, carboxymethyl cellulose, sodium alginate, potassium alginate, starch, carboxymethyl hydroxypropyl cellulose, and the combinations thereof;

the content of the water-soluble external coating is from about 0.1 weight percent to about 10.0 weight percent of proppant, for example, from about 1.0 weight percent to about 5.0 weight percent of proppant;

the candidates for the water-soluble coating include, but are not limited to, the following water-soluble polymers: polyvinylalcohol with various polyvinylacetate groups content, polyacrylic acid, polyacrylamides, polyethylene glycol, polyvinylpyrrolidone copolymers, polyamines, polyethylamines, gelatin, starch, casein, their derivatives and combinations thereof;

the proppant particle substrate is selected from the group of sands, ceramic proppants, and polymer-based proppants selected from ultra-lightweight proppants, super-lightweight proppants, lightweight proppants, medium-strength, high-strength, and ultra-high-strength proppants, composite particles usable as proppants for hydraulic fracturing, and combinations thereof; and

the particulate material forms hydraulic fracture packing.

## BRIEF DESCRIPTION OF THE DRAWINGS

The essence of this disclosure is shown in Figures 1-5.

Figure 1 shows different concentrations of additives on a proppant-free stage and a proppant-laden stage.

Figure 2 shows the schematic model of the proppant coated with the gelling agent.

Figure 3 shows the resulting viscosity of fluid in the slurry laden with 2.2 lbs of proppant covered with guar added to one gallon of water.

Figure 4 shows the changes in viscosity of the linear gel before and after the addition of the coated proppant.

Figure 5 shows the changes in viscosity of the linear gel versus the time of the slurry agitation after the addition of the proppant.

## DETAILED DESCRIPTION

In heterogeneous proppant placement (HPP), the proppant for hydraulic fracturing of a formation is added to the fracturing fluid in pulses having alternating clean (free from proppant) and dirty pulses (containing proppant) in the slurry. Alternatively, clean pulses may also be called as proppant-free stages (or pulses) or "clean fluid", while "dirty pulses" can be referred to as proppant-laden stages (or pulses).

The fracturing fluid comprising a crosslinked gel is prepared by metering hydraulic fracturing additives to the linear gel on-the-fly. When the additives react with the linear gel, they form a crosslinked gel, which has a higher viscosity and, in most cases, provides successful hydraulic fracturing job. At elevated temperatures the crosslinked gel viscosity and long-term stability are sensitive to the concentration of some of the additives metered, the sensitivity being dependent on the mineral composition of the mix water and chemical additives used. The crosslinker, the activator, and the delay agent comprising chemicals for crosslinking the linear gel represent a set of additives, which are to be metered very thoroughly in order to maintain good fluid performance.

Nowadays, in HPP, fracturing additives are metered to the fluid at constant rate, basically delivering the same amount of additives to the given volume of slurry regardless the concentration of the proppant in the slurry. But considering alternating clean and dirty stages, the concentration of the additives in the clean fluid is different, with the difference being defined by the so-called slurry yield shown in Equation **Error! Not a valid bookmark self-reference.**. The yield represents the ratio of slurry volume versus the clean fluid volume.

$$\text{Yield} = 1 + \frac{\substack{concentration\ of\ proppant \\ (lbs\ of\ proppant/gal\ of\ fluid}}{density\ of\ proppant\ (lbs/gal))} \quad (1)$$

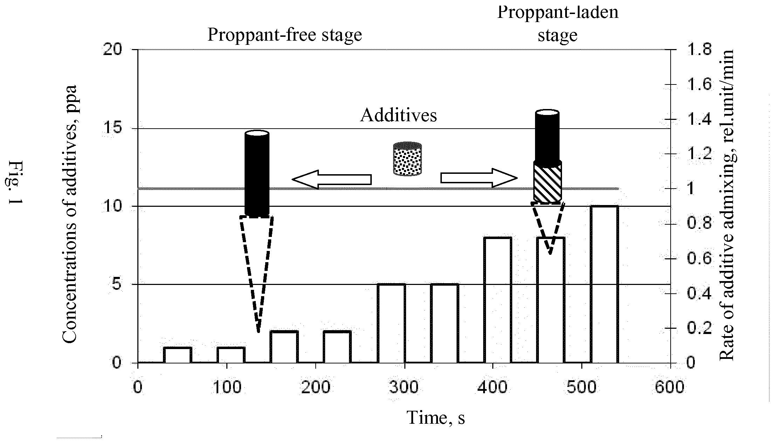

The representation of this phenomenon is shown in Figure 1. Therefore, if a clean pulse contains a perfectly crosslinked fluid, then the gel in a dirty pulse contains an excessive (yield times higher) concentration of additives (such as a crosslinker, an activator, a delay agent, etc.), and hence can become overcrosslinked and thus the gel would have a poorer viscosity and rheological stability over time.

The degree of overcrosslinking increases towards the later proppant stages (where the amount of the proppant added per gallon of the fluid increases) and may become visible by the end of the job as the lower viscosity of the fluid decreases the fracture width and hence increases the risk of screenout of the fracture. In addition to this, worse fluid stability leads to faster proppant settling and wrong pattern of proppant placement. Furthermore, lowering of fluid viscosity in "dirty" pulses can lead to separation of the stages and their admixture with a clean fluid, which, in turn, results in the reduction of propped fracture width and can lead to pinch outs of fracture walls between proppant pillars. Overall, this effect can lead to lower well production than expected after the stimulation of the formation.

The present disclosure suggests a novel way of achieving the better rheological stability of the fluid in a dirty pulse and the higher stability of the proppant stage by using the proppant coated with a gelling agent.

The method comprises the following:

- during hydraulic fracturing, the proppant coated with a gelling agent is added to the fluid according to the HPP treatment design; and
- the gelling agent becomes released from the proppant's surface once the proppant is immersed in the fluid.

The release of the gelling agent from proppant's surface increases the viscosity of the fluid in a proppant-laden stage locally and also reduces the effect of overcrosslinking of the gel as an additional gelling agent added to the fluid will utilise the excessive amount of hydraulic fracturing additives (crosslinker/activator/delay agent, etc.). Apart from that, a side benefit of the disclosure is allowing the use of the fracturing fluid with lower viscosity in a proppant-free stage and with lower polymer loading in the stages facilitating the forming of channels, which results in smaller fracture and formation damage due to polymer residue. Moreover, the application of this proppant in a slickwater seems also beneficial as the local hydration of the gel in the proppant-laden stage would reduce the settling rate of the proppant.

The following section describes the structure of the proppant.

As a proppant substrate, particles of any origin can be taken. Suitable particles include any known particles used in hydraulic fracturing or gravel packing. Non-limiting examples of suitable proppants include minerals, sands, ceramic proppants, and polymer-based proppants selected from ultra-lightweight proppants, super-lightweight proppants, lightweight proppants, medium-strength, high-strength, and ultra-high-strength proppants, composite particles usable as proppants for hydraulic fracturing. Ceramic proppants can be produced on the basis of silica-alumina raw material, magnesium-silicate raw material, glass-ceramics, natural minerals enriched with oxides of aluminium, magnesium, silicon, zinc, iron, calcium, and titanium-mainly, bauxites, serpentinites, etc. Also, the following particles can be used as proppant substrate: nut shells (including crushed wallnut hulls), gravels, mine tailings, coal ashes, rocks (including bauxite), smelter slag, diatomaceous earth, crushed charcoals, micas, clays (including kaolin clay particles), sawdust, wood chips, resinous particles (including phenol-formaldehyde particles), polymeric particles, and combinations thereof. It is to be appreciated that other particles not mentioned herein may also be suitable.

The gelling agent can be coated on a proppant substrate either directly with the use of the tackifying agent or alternatively can be embedded in the matrix of a water-soluble polymer. The second option works here, since the water-soluble polymer protects the gelling agent from accidental premature release before the proppant is immersed in the fluid.

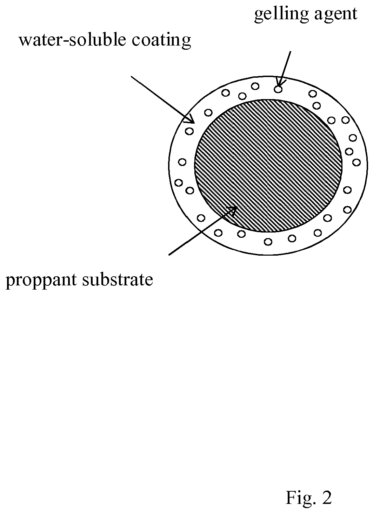

The structure of the proppant is shown in Figure 2, where the proppant particle is coated with a water-soluble coating having the gelling agent embedded in the coating.

The candidates for the water-soluble polymer include, but are not limited to, polyvinylalcohol with various polyvinylacetate groups content, polyacrylic acid, polyacrylamides, polyethylene glycol, polyvinylpyrrolidone copolymers, polyamines, polyethylamines, gelatin, starch, casein, their derivatives and combinations thereof.

The presence of the gelling agent embedded in the matrix of the water-soluble polymer enables to adjust conditions (time/temperature) of fluid viscosity increase based on the solubility of the given polymers in water.

The candidate materials for the gelling agent comprise guar and its derivatives including, but not limited to, polysaccharide guar, hydroxypropyl guar, carboxymethyl hydroxypropyl guar, cellulose and its derivatives, including, but not limited to, carboxymethyl hydroxypropyl cellulose and the combinations thereof.

The method of making the proppant shown in Figure 2 is described in the examples below and comprises the following stages:

    1. dissolve the water-soluble polymer in the proper amount of water;
    2. add and disperse the gelling agent in the solution of the water-soluble polymer; and
    3. add the solution of the water-soluble polymer and the gelling agent to the proppant substrate and start the drying process while assuring proper agitation and the solution distribution in the proppant. The methods of drying may include utilising the fluid bed or granulators.

The method is expected to be feasible to be performed with the use of the conventional factory equipment suitable for creating a resin coating on the proppant.

**EXAMPLES**

The present disclosure can be further understood from the following examples.

Example 1.

The example below illustrates the feasibility of the method suggested for coating the proppant with the gelling agent embedded in the matrix of the water-soluble polymer.

Table 1. Composition of the coated proppant in Example 1

| Material | Amount |
|---|---|
| Water | 45.0 ml |
| Polyvinyl alcohol | 4.7 g |
| Guar | 2.1 g |
| CarboPROP 12/18® | 180.0 g |

The proppant CarboPROP 12/18® was coated in the following way with the use of the components and their amounts listed in Table 1.

1. Polyvinyl alcohol was dissolved in water.
2. Polysaccharide guar was then slowly added to the water solution of polyvinyl alcohol. The mixture was shaken properly to assure the even distribution of guar in the solution.
3. The solution obtained was added to CarboPROP 12/18®, and then the appropriate agitation of the fluid and the proppant was carried out in the beaker until the coating on the proppant became dry.

The resulting proppant revealed good adhesion of the coating to the surface and a very limited amount of particles stuck to each other, indicating the potentially good flowability of the coated proppant. The mass of polyvinyl alcohol can be adjusted in order to obtain the proppant coating of the desired homogeneity and mechanical stability. Meanwhile, the amount of water used for making the solution of polyvinyl alcohol and guar can be freely adjusted in order to improve the mixing process.

Example 2.

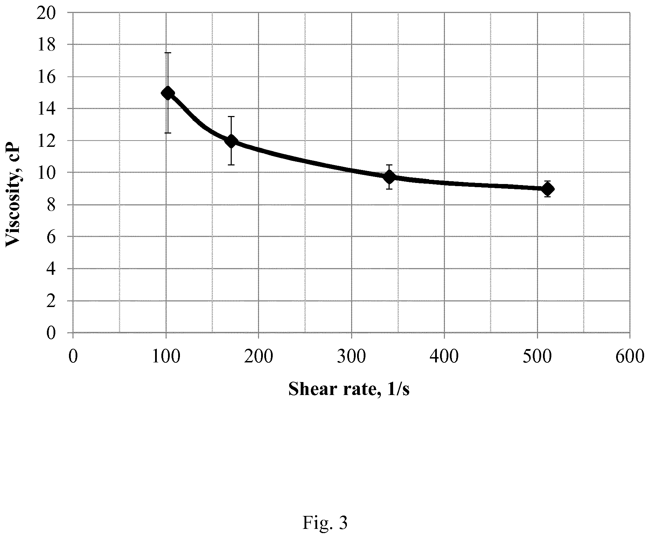

The example below illustrates the feasibility of using the proppant coated with the gelling agent when added to water.
The proppant from Example 1 was added to the DI water in order to evaluate how the coated guar impacts viscosity. The coated proppant was added to water in the concentration of 2.2 lbs of the proppant per 1 gal of the fluid. The resulting viscosity of the fluid, obtained after 5-minute agitation is shown in Figure 3, and the results are close to the viscosity of the linear gel with guar polymer loading of 17 lbs/1,000 gal.
It is worth mentioning that the amount of guar involved in mixing can be either increased or decreased in order to adjust the resulting viscosity.

Example 3.

The example below illustrates the feasibility of using the proppant coated with the gelling agent when added to the linear gel.
The proppant CarboPROP 12/18® was coated in the way described in Example 1 with the use of the components and their amounts listed in Table 2.

Table 2. Composition of coated proppant in Example 3

| Material | Amount |
|---|---|
| Water | 30.0 ml |
| Polyvinyl alcohol | 3.0 g |

(continued)

| Material | Amount |
|---|---|
| Guar | 1.1 g |
| CarboPROP 12/18® | 300.0 g |

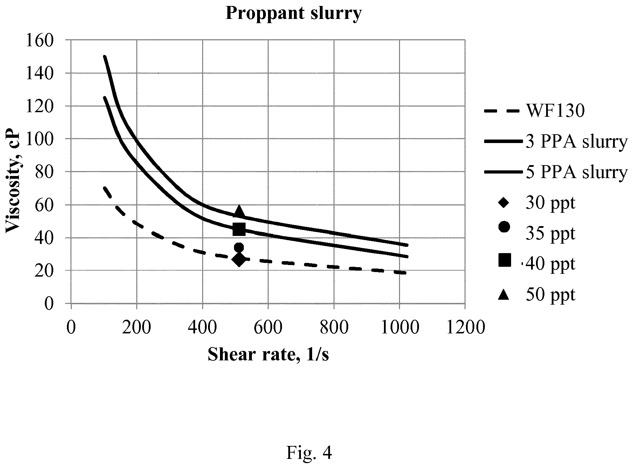

After the coating was done, the resulting proppant was added to the linear gel in the amount of 30 lbs of polymer per 1,000 gal of DI water in order to evaluate how the addition of the coated guar to the fluid impacts viscosity. The coated proppant was added to water in the concentration of 3 and 5 lbs of the proppant per 1 gal of the fluid. The resulting viscosity, obtained after 5-minute agitation for 3 lbs and 5 lbs proppant slurries per 1 gal of the fluid in comparison to the original linear gel (WF130), 35, 40 and 50, 30 lbs of guar per 1,000 gal of DI water is shown in Figure 4.

According to the mass balance of the guar added to the original proppant, 3 lbs of the proppant slurry results in the addition of the gelling agent in the amount of 11 lbs of guar per 1,000 gal of the fluid, whereas for 5 lbs of the proppant per 1 gal of the fluid the value is 18 lbs of guar per 1,000 gal of the fluid. The viscosity chart in Figure 4 shows the proper correlation of the additional guar amount delivered with the coated proppant and the corresponding increase in viscosity.

It is worth mentioning that the water-soluble polymer for embedment of the gelling agent may not be limited to polyvinyl alcohol as any water-soluble polymer is suitable for the application.

Furthermore, the crosslinking of the WF130 linear gel and the resulting gel separated from the proppant slurry in the amount of 3 lbs per 1 gal of the fluid and 5 lbs per 1 gal of the fluid was checked. The same amount of the crosslinker per the fixed volume of the slurry was added in order to simulate a real case scenario where the addition of the crosslinker is performed at the fixed rate for both clean and dirty proppant pulses. In particular, the crosslinker solution with the concentration of 2 gal/1,000 gal (2 g/t) was added to the WF130 linear gel, whereas for the proppant slurries in the amount of 3 lbs per 1 gal of the fluid and 5 lbs per 1 gal of the fluid a larger concentration of the crosslinker was added in order to simulate proppant slurry yield (see Equation (1)). The crosslinker concentration and the crosslinked fluid performance are shown in Table 3, where VCT and HLT being "Vortex closure time" and "Hang lip time", respectively.

Table 3. Crosslinked slurry performance

| Fluid | Yield | Crosslinker concentration, g/t | VCT, sec | HLT, sec |
|---|---|---|---|---|
| WF130 | 1.0 | 2.0 | 21 | 90 |
| 3 PPA slurry | 1.11 | 2.2 | 14 | 45 |
| 5 PPA slurry | 1.19 | 2.4 | 12 | 30 |

One can observe that the fluid crosslinking performance when the proppant is added to the fluid improves as crosslinking happens earlier due to the additional gelling agent delivered to the fluid.

This phenomenon gives the following.

1. In case the fluid quality becomes compromised as a result of overcrosslinking during heterogeneous proppant placement by alternating clean and dirty pulses (which can be mostly pronounced at later proppant stages), the use of the proppant coated with the polymer can be a good mitigation measure as it improves the quality of the fluid in the proppant-laden pulse. As a side benefit, it increases the mechanical stability of the proppant stage.

2. Hydraulic fracturing can be performed with pumping a lower viscosity fluid (for example, slickwater or polymer fluid with lower polymer loading) throughout the process as it will reduce polymer invasion in the rock matrix and proppant pack. Meanwhile, the additional polymer being released from the proppant will maintain the mechanical stability of the proppant stage.

Example 4.

The example below illustrates the rate of viscosity build-up once the proppant coated with the gelling agent is immersed in water.

The proppant CarboPROP 12/18® was coated in the following way with the use of the components and their amounts listed in Table 4.

Table 4. Composition of the coated proppant in Example 4

| Material | Amount |
|---|---|
| Water | 60.0 ml |
| Polyvinyl alcohol | 2.0 g |
| Carboxymethyl hydroxypropyl guar | 0.74 g |
| CarboPROP 12/18® | 200.0 g |

1. Polyvinyl alcohol was dissolved in water.

2. Carboxymethyl hydroxypropyl guar (CMHPG) was then slowly added to the water solution of polyvinyl alcohol. The mixture was shaken properly to assure the even distribution of guar in the solution.

3. The solution obtained was added to CarboPROP 12/18®, and then the appropriate agitation of the fluid and the proppant was carried out until the coating on the proppant became dry.

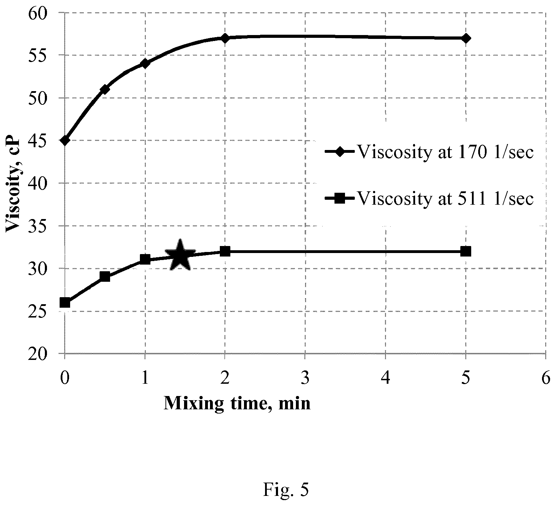

After the coating was done the resulting proppant was added to the linear gel in the amount of 30 lbs of CMHPG per 1,000 gal of DI water. The concentration of the proppant in the linear gel was 3 lbs of the proppant per 1 gal of the fluid. The resulting slurry was agitated for the specified period of time, then the fluid was separated from the proppant, and the viscosity of fluid was measured. Figure 5 shows the changes in the viscosity of the linear gel versus the time of the slurry agitation after the addition of the proppant. After approximately 1.5 minutes of agitation, the viscosity being equal to the viscosity of gel with CMHPG loading of 35 lbs per 1,000 gal of deionised water was achieved, while further agitation did not affect the viscosity in any way. Figure 5 uses the asterisk symbol to show the viscosity of gel with CMHPG loading of 35 lbs per 1,000 gal of deionised water at 511 1/s.

To sum up, the examples above demonstrated that the concept allows the delivery of additional gelling agent to the fracturing fluid with the use of the proppant, the fast hydration of an additional polymer, and the improvement in crosslinking performance of the coated proppant-laden slurry.

## Industrial applicability

This description discloses solutions regarding the use of the proppant coated with the gelling agent, which is released upon proppant introduction into the slurry stages during heterogeneous proppant placement in a hydraulic fracture. Due to this release of the gelling agent, the viscosity of the dirty stage increases locally, and hence it promotes the better stability of the fluid and reduces the effect of the additives concentration change on the fracturing fluid properties. Thus, the proposed technical solutions are applicable in the oil and gas industry.

## Claims

1. A proppant being a particulate material, where each particle comprises a proppant particle substrate, a water-soluble external coating on the proppant particle substrate, and a gelling agent at least partially embedded in the water-soluble external coating in such a manner so that the said agent is substantially released from the proppant particle substrate when the water-soluble coating dissolves or degrades as a result of proppant introduction into the fracturing fluid stages during heterogeneous proppant placement in a hydraulic fracture.

2. The proppant of claim 1, wherein the gelling agent has the rate of dissolution in the fracturing fluid that exceeds the rate of dissolution of the water-soluble external coating in the fracturing fluid, which allows the coating to prevent the premature release of the gelling agent into the fracturing fluid before the proppant enters the fracturing fluid.

3. The proppant of claim 1, wherein the gelling agent, being released into the fracturing fluid, increases the fracturing fluid viscosity in a proppant-laden stage as compared to the fracturing fluid viscosity in a proppant-free stage.

4. The proppant of claim 1, wherein the gelling agent, being released into the fracturing fluid, reduces the effect declining the concentration of additives, in particular, to prevent the excessive crosslinking in a proppant-laden stage.

5. The proppant of claim 1, wherein the gelling agent concentration is from about 0.1 weight percent to about 10.0 weight percent of proppant, for example, from about 0.3 weight percent to about 5.0 weight percent of proppant.

6. The proppant of claim 1 or claim 5, wherein the material for the gelling agent comprises guar and its derivatives comprising polysaccharide guar, hydroxypropyl guar, carboxymethyl hydroxypropyl guar, cellulose and its derivatives including, but not limited to, carboxymethyl hydroxypropyl cellulose and combinations thereof.

7. The proppant of claim 1, wherein the concentration of the water-soluble external coating is from about 0.1 weight percent to about 10.0 weight percent of proppant, for example, from about 1.0 weight percent to about 5.0 weight percent of proppant.

8. The proppant of claim 1 or claim 7, wherein the water-soluble coating material is selected from the list of water-soluble polymers: polyvinylalcohol with various vinylacetate groups content, polyacrylic acid, polyacrylamides, polyethylene glycol, polyvinylpyrrolidone copolymers, polyamines, polyethylamines, gelatin, starch, casein, derivatives and combinations thereof.

9. The proppant of claim 1, wherein the proppant particle substrate is selected from the group of sands, ceramic proppants, and polymer-based proppants selected from ultra-lightweight proppants, super-lightweight proppants, lightweight proppants, medium-strength, high-strength, and ultra-high-strength proppants, composite particles usable as proppants for hydraulic fracturing, and combinations thereof.

10. A particulate material for enhancing the efficiency of a method for heterogeneous proppant placement in at least one fracture within the subterranean formation, which contains a substrate from particles, a water-soluble external coating on the particle substrate, and a gelling agent at least partially embedded in the water-soluble external coating in such a manner so that the said agent is substantially released from the particle substrate when the water-soluble coating dissolves or degrades as a result of proppant introduction into the fracturing fluid stages during heterogeneous proppant placement.

11. The particulate material of claim 10, wherein the particulate material forms hydraulic fracture packing.

12. The particulate material of claim 10, wherein the gelling agent has the rate of dissolution in the fracturing fluid that exceeds the rate of dissolution of the water-soluble external coating in the fracturing fluid, which allows the coating to prevent the premature release of the gelling agent into the fracturing fluid before the proppant enters the fracturing fluid.

13. The particulate material of claim 10, wherein the gelling agent, being released into the fracturing fluid, is able to increase the fracturing fluid viscosity in a proppant-laden stage as compared to the fracturing fluid viscosity in a proppant-free stage.

14. The particulate material of claim 10, wherein the gelling agent, being released into the fracturing fluid, reduces the effect of declining the concentration of additives, in particular, to prevent the excessive crosslinking in a proppant-laden stage.

15. The particulate material of claim 10, wherein the concentration of the gelling agent is from about 0.1 weight percent to about 10.0 weight percent of proppant, for example, from about 0.3 weight percent to about 5.0 weight percent of proppant.

16. The particulate material of claim 10, wherein the material for the gelling agent comprises guar and its derivatives, including polysaccharide guar, hydroxypropyl guar, carboxymethyl hydroxypropyl guar, cellulose and its derivatives including carboxymethyl hydroxypropyl cellulose and combinations thereof.

17. The particulate material of claim 10, wherein the concentration of the water-soluble external coating is from about 0.1 weight percent to about 10.0 weight percent of proppant, for example, from about 1.0 weight percent to about 5.0 weight percent of proppant.

18. The particulate material of claim 10, wherein the candidates for the water-soluble coating include, but are not limited to, the following water-soluble polymers: polyvinylalcohol with various vinylacetate groups content, polyacrylic acid, polyacrylamides, polyethylene glycol, polyvinylpyrrolidone copolymers, polyamines, polyethylamines, gelatin, starch, casein, derivatives and combinations thereof.

19. The particulate material of claim 10, wherein the proppant particle substrate is selected from the group of sands, ceramic proppants, and polymer-based proppants selected from ultra-lightweight proppants, super-lightweight proppants, lightweight proppants, medium-strength, high-strength, and ultra-high-strength proppants, composite particles usable as proppants for hydraulic fracturing, and combinations thereof.

20. A method for enhancing the efficiency of heterogeneous proppant placement in at least one fracture of a fractured layer, the method comprising the injection of alternating fracturing fluid stages laden with the particulate material according to any of claims 10-19, and fracturing fluid stages free from the particulate material according to any of claims 10-19, into the fractured layer at a pressure exceeding the fracturing pressure, through a plurality of perforation clusters in the wellbore in the fractured layer, where fracturing fluid stages laden with the particulate material according to any of claims 10-19 form supports after fracture closure.

21. A method of claim 20, wherein the particulate material is a proppant comprising a proppant particle substrate, a water-soluble external coating on the proppant particle substrate, and a gelling agent at least partially embedded in the water-soluble external coating in such a manner so that the gelling agent is substantially released from the underground particle substrate when the water-soluble coating dissolves or degrades as a result of proppant introduction into the fracturing fluid stages with heterogeneous proppant placement in a hydraulic fracture.

22. The method of claim 20, wherein the gelling agent has the rate of dissolution in the fracturing fluid that exceeds the rate of dissolution of the water-soluble external coating in the fracturing fluid, which allows the coating to prevent the premature release of the gelling agent into the fracturing fluid before the proppant enters the fracturing fluid.

23. The method of claim 20, wherein the gelling agent, being released into the fracturing fluid, is able to increase the fracturing fluid viscosity in a proppant-laden stage as compared to the fracturing fluid viscosity in a proppant-free stage.

24. The method of claim 20, wherein some or all fracturing fluid stages additionally contain additives such as crosslinker, activator, gel breaker, etc., to impart the corresponding properties to the fracturing fluid.

25. The method of claim 20, wherein the gelling agent, being released into the fracturing fluid, reduces the effect of declining the concentration of additives, in particular, to prevent the excessive degree of crosslinking in a proppant-laden stage.

26. The method of claim 20, wherein the concentration of the gelling agent is from about 0.1 weight percent to about 10.0 weight percent of proppant, for example, from about 0.3 weight percent to about 5.0 weight percent of proppant.

27. The method of claim 20 or claim 26, wherein the materials for the gelling agent comprise guar, hydroxypropyl guar, carboxymethyl hydroxypropyl guar, carboxymethyl cellulose, sodium alginate, potassium alginate, starch, carboxymethyl hydroxypropyl cellulose and the combinations thereof.

28. The method of claim 20, wherein the concentration of the water-soluble external coating is from about 0.1 weight percent to about 10.0 weight percent of proppant, for example, from about 1.0 weight percent to about 5.0 weight percent of proppant.

29. The method of claim 20 or claim 28, wherein the candidates for the water-soluble coating include, but are not limited to, the following water-soluble polymers: polyvinylalcohol with various vinylacetate groups content, polyacrylic acid, polyacrylamides, polyethylene glycol, polyvinylpyrrolidone copolymers, polyamines, polyethylamines, gelatin, starch, casein, derivatives and combinations thereof.

30. The method of claim 20, wherein the proppant particle substrate is selected from the group of sands, ceramic proppants, and polymer-based proppants selected from ultra-lightweight proppants, super-lightweight proppants, lightweight proppants, medium-strength, high-strength, and ultra-high-strength proppants, composite particles usable as proppants for hydraulic fracturing, and combinations thereof.

31. The method of claim 20, wherein the particulate material forms hydraulic fracture packing.

Fig. 1

water-soluble coating

gelling agent

proppant substrate

Fig. 2

Fig. 3

**Proppant slurry**

Fig. 4

Fig. 5

## INTERNATIONAL SEARCH REPORT

| | International application No. |
|---|---|
| | PCT/RU 2014/000233 |

| A. | CLASSIFICATION OF SUBJECT MATTER |
|---|---|

C09K 8/80 (2006.01); C09K 8/92 (2006.01); E21B 43/267 (2006.01)

According to International Patent Classification (IPC) or to both national classification and IPC

| B. | FIELDS SEARCHED |
|---|---|

Minimum documentation searched (classification system followed by classification symbols)

C09K 8/00-8/94, E21B 43/00-43/27

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, DWPI, EAPATIS, PATENTSCOPE

| C. | DOCUMENTS CONSIDERED TO BE RELEVANT | |
|---|---|---|
| Category* | Citation of document, with indication, where appropriate, of the relevant passages | Relevant to claim No. |
| X | US 2012/0227967 A1 (SCHLUMBERGER TECHNOLOGY CORPORATION) 13.09.2012, items 1, 20, 25, 26 of the claims, paragraphs [0003], [0004], [0006], [0015], [0018], [0019], [0023], [0024], example 2 | 1-31 |
| A | WO 2013/158308 A1 (SOANE ENERGY, LLC) 24.10.2013 | 1-31 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 December 2014 (01.12.2014) | 11 December 2014 (11.12.2014) |

| Name and mailing address of the ISA/ RU | Authorized officer |
|---|---|
| | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6776235 B1
- US 7581590 B2
- US 7798224 B2
- US 20130056213 A1
- US 2012227967 A1
- US 2014000891 A1
- WO 2013158308 A1